# EUROPEAN PATENT APPLICATION

(11) **EP 1 616 611 A1**
(43) Date of publication of application: **18.01.2006**
(21) Application number: 05254329.5
(22) Date of filing: 11.07.2005
(51) Int. Cl.: B01D 29/21, B01D 29/96, B01D 35/147

(54) **Filter with replaceable filter element and method for replacing the filter element**

(30) Priority: 12.07.2004 US 889440
(71) Applicant: ArvinMeritor Technology, LLC, Troy, MI 48084 (US)
(72) Inventor: Yates, Brian Glenn, Holly Springs, North Carolina 27540 (US); Wright, Allen Buhr, Hope Mills, North Carolina 28348 (US); Trevino, Jorge Antonio, Fayetteville, North Carolina 28314 (US)
(74) Representative: Jones, John Bryn

(57) **Abstract**

A separate filter cartridge and latch release are used to replace a used filter cartridge in a filter assembly having a latch. In one example, the filter cartridge includes opposing end caps that are substantially the same as one another. The end caps have central holes. The filter cartridge is inserted into a filter assembly housing in which the latch prevents a cover from being installed onto a filter assembly housing until the latch is deactivated. The latch release is arranged relative to the filter cartridge to cooperate with the latch to enable the cover to be reattached to the filter assembly housing. The latch release includes tabs that align with features of the latch and extend through the central holes to cooperate with the latch. The latch release is removably secured to the cover and the filter cartridge.

## Description

### BACKGROUND OF THE INVENTION

This invention relates to a filter cartridge and a method and apparatus for replacing the filter cartridge from a filter housing. Specifically, the invention includes a latch release that is used separately from the filter cartridge to enable installation of a new, replacement filter cartridge.

Filter assemblies are used for many applications such as for various fluid systems of an automobile. The filter assemblies, for example, are used to filter fuel, air, oil and transmission fluid. Typical filter assemblies use many disposable components such as housings, valves and seals that add to the cost of the filter assembly. Furthermore, these components of the filter assembly should be properly disposed of to minimize the environmental impact. Disposal can be difficult and costly.

It is desirable to reduce the cost and environmental impact associated with replacement of the filter assembly. One solution has been to provide a permanent filter housing that is mounted to a portion of the vehicle. The housing has a cover that is removable to receive a replacement filter cartridge. The filter cartridge typically only includes opposing end caps and a filter element retained between the end caps. The filter cartridge is replaced at desired intervals.

Some filter assemblies using permanent housings incorporate a latch that prevents reinstallation of the cover unless a particular replacement filter cartridge is used. The particular filter cartridge uses two distinct end caps. The particular filter cartridge must be installed into the filter housing into a particular orientation. One end cap has features integrated with it that cooperates with the latch permitting the cover to be reinstalled.

### SUMMARY OF THE INVENTION

The invention relates to a filter cartridge and latch release that may be packaged with one another for use in replacing a used filter cartridge in a filter assembly. In one example embodiment, the filter cartridge includes opposing end caps that are substantially the same as one another. The end caps have central holes. The filter cartridge is inserted into a filter assembly housing, which includes a latch that prevents a cover from being installed onto the filter assembly housing over the filter cartridge until the latch is deactivated.

The latch release, which is a separate component from the filter cartridge, is arranged relative to the filter cartridge to cooperate with the latch to enable the cover to be reattached to the filter assembly housing. The latch includes tabs that align with features of the latch and extend through the central hole of an exposed end cap to cooperate with the latch.

These and other features of the present invention can be best understood from the following specification and drawings, the following of which is a brief description.

### BRIEF DESCRIPTION OF THE DRAWINGS

FIGURE 1 is a cross-sectional view of a filter assembly with an inventive filter cartridge and latch release, with a latch in an unlatched position.
FIGURE 2 is a cross-sectional view of a bypass valve and latch of the filter assembly shown in Figure 1 in the latched position.
FIGURE 3 is a top elevational view of the bypass valve and latch shown in Figure 2.
FIGURE 4 is a bottom perspective view of the inventive filter cartridge and latch release.
FIGURE 5 is a top perspective view of the filter cartridge and latch release shown in Figure 4.
FIGURE 6 is a cross-sectional view of the inventive latch release.
FIGURE 7 is an exploded perspective view of the filter assembly with the bypass valve and latch in the latched position shown in Figure 2 prior to installation of the inventive filter cartridge.

### DETAILED DESCRIPTION OF THE PREFERRED EMBODIMENT

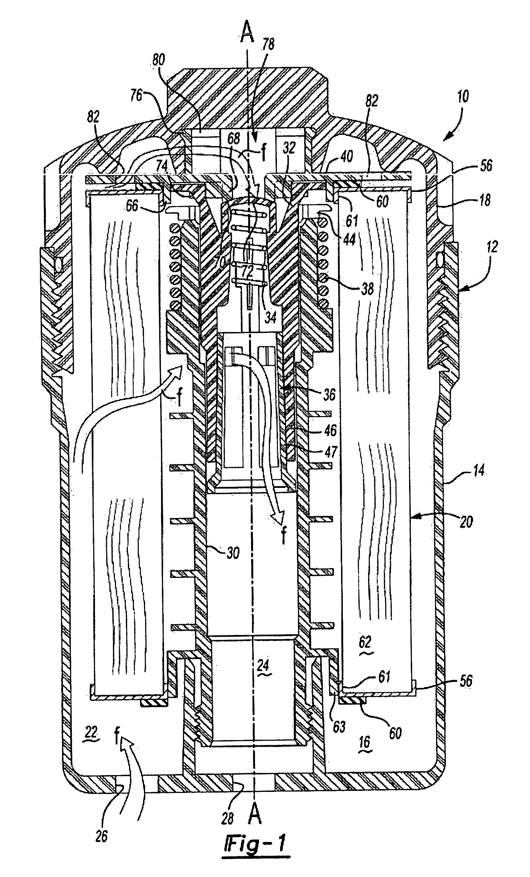

An example filter assembly 10 is shown in Figure 1 in cross-section. The filter assembly 10 includes a housing 12 having a body 14 providing a cavity 16. A cover 18 is removably secured to the body 14 to provide access to the cavity 16 when desired. In the example shown, the cover 18 is threadingly secured to the body 14. The cover 18 includes a feature at its exterior to facilitate removal of the cover 18 from the body 14, such as a hexagonal protrusion for receiving a wrench.

An inventive filter cartridge 20 is arranged within the cavity 16 for filtering a fluid flowing through the cavity 16. The housing 12 includes an inlet side 22 and an outlet side 24 respectively arranged at an exterior and interior of the filter cartridge 20. Fluid is provided to the inlet side 22 through an inlet 26 at a base of the body 14. Fluid exits the outlet side 24 through an outlet 28 at the base of the body 14. Arrows F indicate fluid flow through the filter assembly 10. However fluid flow may he the reverse of the direction indicated, and the inlet and outlet 26 and 28 may be provided elsewhere on the housing 12.

The housing 12 includes a center tube 30 extending through a central opening in the filter cartridge 20. The center tube 30 is in fluid communication with the outlet side 24 and outlet 28. The center tube 30 provides support for the filter cartridge 20, as is known in the art, and may include apertures at various locations to permit fluid flow to an interior of the center tube 30.

A bypass valve 32 is slidably received by the center tube 30 and is movable along an axis A. The bypass valve 32 is urged to a closed position (shown in Figure 1) by a bypass valve spring 34. The bypass valve 32 moves to an open position to permit fluid to flow from the inlet side 22 directly into the center tube 30 if the filter cartridge 20 becomes clogged. The bypass valve spring 34 has a spring rate selected to enable the bypass valve 32 to open at a predetermined pressure corresponding to a clogged filter cartridge 20.

A latch 36 is slidably received by the bypass valve 32 and center tube 30 and is movable along the axis A. The bypass valve spring 34 is supported between the bypass valve 32 and an upper portion of the latch 36, which is known. The latch 36 is shown in an unlatched position in Figure 1, which permits the cover 18 to be fully installed onto the body 14.

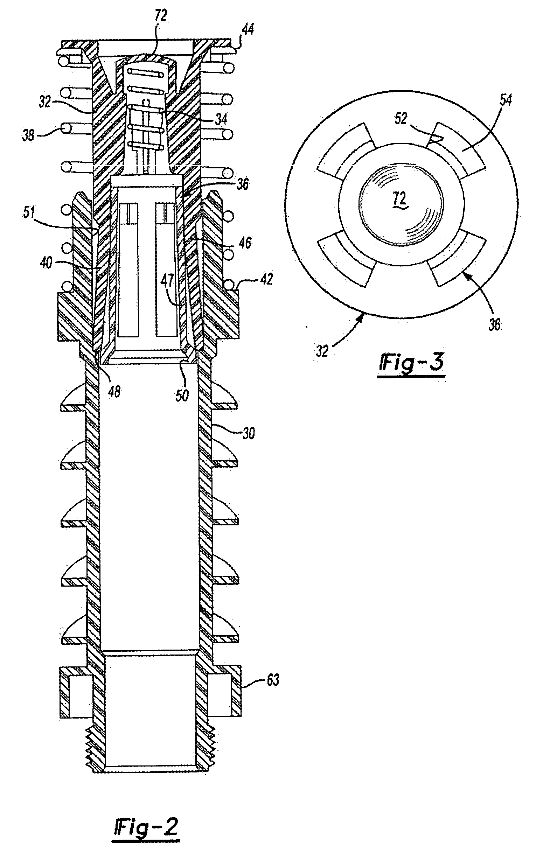

Referring to Figures 1 and 2, a latch spring 38 is arranged between a shoulder 42 of the center tube 30 and a head 44 of the latch 36. The latch spring 38 biases the bypass valve 32 and latch 36 upward to a latched position, which is shown in Figure 2. The bypass valve 32 includes downwardly depending first legs 46 that are arranged in alternating relationship to second legs 47 of the latch 36. The center tube 30 includes a radially extending ledge 48. The first legs 46 extend outward and into engagement with an inner surface 51 of the center tube 30 which is above the ledge 48, as shown in Figure 2. The latch 36 includes a radial flange 50 that is arranged radially inward of ends of the first legs 46 to urge the first legs 46 into engagement with the inner surface 51 when the bypass valve 32 and latch 36 are in the latched position. In the latched position, the bypass valve 32 is prevented from being inserted back into the center tube 30 unless the latch 36 is released, which will be discussed in more detail below.

Referring to Figure 3, an upper portion of the bypass valve 32 includes alternating apertures 52. The latch 36 includes protrusions 54 that extend into the apertures 52. Engagement and downward movement of the protrusions 54 moves the radial flange 50 out of engagement with the ends of the first legs 46 so that the first legs 46 disengage from inner surface 51 and are permitted to move inward and downward into the center tube 30, past the ledge 48, to the unlatched position.

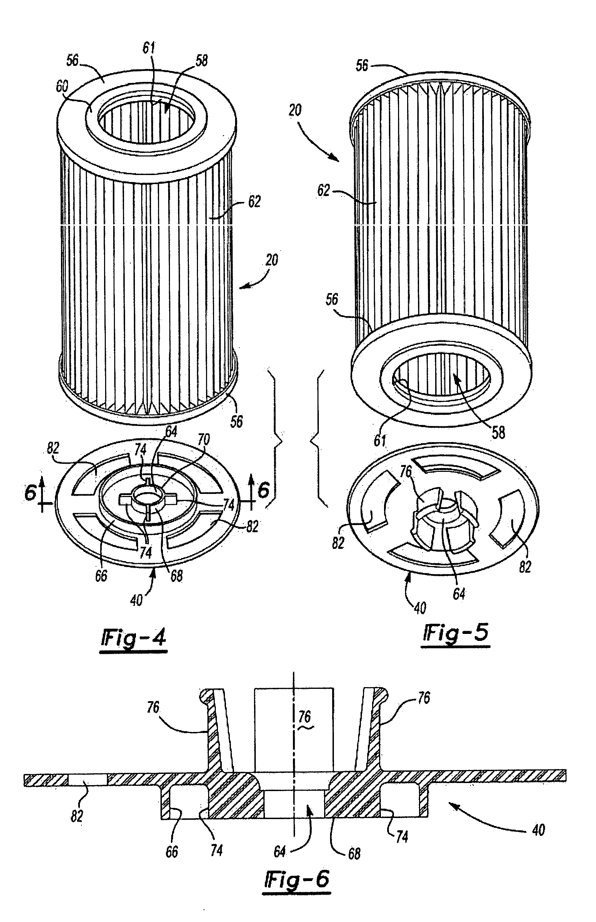

As shown in Figures 4-6, filter cartridge 20 includes end caps 56 that are substantially similar so that the filter cartridge may be inserted into the cavity 16 with either end cap 56 first. In the example shown, the end caps 56 are identical to one another. Both end caps 56 include large central holes 58 with a gasket 60 arranged about a circumference of the holes 58. The gasket 60, for example, is constructed from a felt material. The end caps 56 include a generally U-shaped cross-section, which is best seen in Figure 1. A filter element 62 is retained between the end caps 56 in any suitable manner, for example, using an adhesive material, which is well known in the art.

Referring to Figures 4-6, the inventive filter cartridge 20 cooperates with a separate body in the form of a latch release 40 that is used to engage the protrusions 54 to move the latch 36 axially downward and into the center tube 30. The example latch release 40 is a disc-shaped body.

The latch release 40 includes an inner annular flange 68 providing an opening 64 permitting fluid to flow from the inlet side 22 to the bypass valve 32. An end 70 of the inner annular flange 68 engages a surface 72 of the bypass valve 32 to prevent fluid flow passed the bypass valve 32 when in the closed position.

The latch release 40 also includes an outer annular flange 66 on the same side as the inner annular flange 68. The outer annular flange 66 engages an inner wall 61 of the adjacent, exposed end cap 56 to provide a seal with the end cap 56. The gasket 60 also seals with the end cap 56. The inner wall 61 of the opposite end cap 56 engages an outer surface of the center tube 30 or another feature of the housing 12, which is best shown in Figure 1.

The latch release 40 also includes at least one hole being arranged outboard of the hole in the end cap. In this case there are multiple arcuate holes 82 to permit fluid flow past the latch release 40.

The latch release 40 includes tabs 74 extending from the latch release 40 on a side opposite the outer and inner annular flanges 66 and 68, in the example shown, to engage the protrusions 54. One or more of the tabs ends through the hole 58 in the end cap 56. In the example shown, the tabs 74 extend radially outwardly from the inner annular flange 68 in a star-shaped configuration. However, the tabs 74 may be of any number and of any suitable configuration.

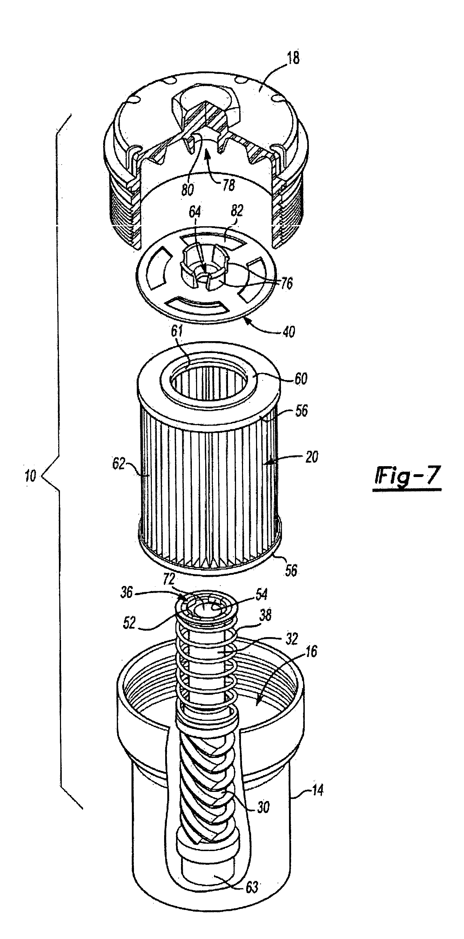

In the example shown, the latch release 40 includes retaining members 76 that cooperate with the cover 18 to secure the latch release 40 to the cover 18. The retaining members 76 are prongs that cooperate with an annular recess 80 of an aperture 78 in an underside of the cover 18, which is shown in Figures 1 and 7. The latch release 40 may be snapped to the cover 18 using the retaining member 76 and annular recess 80.

In operation, the cover 18 is removed from the body 14 at a desired interval to provide access to the cavity 16 so that the filter cartridge 20 may be replaced. Once the used filter cartridge 20 is removed, the bypass valve 32 and latch 36 automatically extend to a latched position, as shown in Figures 2 and 7, under the biasing force of latch spring 38. The inventive filter cartridge 20 is placed over the center tube 30 so that one end cap 56 is in sealing engagement with the outer surface 63. Since the end caps 56 are the same, the inventive filter cartridge 20 may be inserted into the cavity 16 with either end cap 56 inserted first.

Next, the latch release 40 is installed onto the exposed end cap 56. In the installed position the latch release is arranged to be in close proximity to one of the end caps 56. The gasket 60 seals against the latch release 40 and the outer annular flange 66 seals against the inner walls 61 of the exposed end cap 56. The latch release 40 is aligned so that the tabs 74 engage the protrusions 54. Now, downward movement of the latch release 40 moves the latch 36 downward to disengage the radial flange 50 from the first legs 46. The cover 18 can then be threadingly secured to the body 14. The retaining members 76 will snap into engagement with the annular recess 80 upon complete installation of the cover 18 onto the body 14. Subsequent removal of the cover 18 will allow removal of both the latch release 40 and the filter cartridge 20 from the cavity 16.

Alternatively, the latch release 40 can be installed onto the cover 18 and then the cover 18 can be threadingly secured to the body 14 after installation of the filter cartridge 20. Rotation of the cover 18 will align the tabs 74 with the protrusions 54. The tabs 74 will be retained within the apertures 52 thereby maintaining alignment with the protrusions 54 during additional rotation of the cover 18 during reinstanation.

The latch release 40 and end caps 56 are preferably constructed from a plastic material capable of withstanding the fluid environment to which the latch release 40 and end caps 56 are exposed. The filter element 62 is preferably a pleated paper element. The latch release 40, end caps 56 and filter element 62 can be easily disposed of, such as by low temperature incineration, in an environmentally friendly manner.

The latch release 40 and filter cartridge 20 are preferably sold as a kit to customers. In instances when such a kit has already been used with the housing 12, the old latch release 40 may be reused and the new latch release 40 may be recycled or vice versa.

Although a preferred embodiment of this invention has been disclosed, a worker of ordinary skill in this art would recognize that certain modifications would come within the scope of this invention. For that reason, the following claims should be studied to determine the true scope and content of this invention.

## Claims

1. A filter cartridge replacement assembly comprising:
a filter cartridge including opposing end caps and a filter element retained between the end caps, the end caps having central holes; and
a latch release separable from the filter cartridge, the latch release having at least one tab extending from a body, the at least one tab operable to engage a latch of a filter assembly to permit installation of the filter cartridge into a filter assembly housing, the at least one tab arranged to align with the central hole in the one of the end caps in an installed position within the filter assembly housing.

2. The assembly of claim 1, wherein the body includes an inner flange operable to engage a bypass valve in the installed position, the at least one tab radially outboard of the inner flange, the inner flange and at least one tab on a same side of the body.

3. The assembly of any preceding claim, wherein the body includes an outer flange radially outboard of the at least one tab, the outer flange on the same side and arranged to engage the one of the end caps at the central hole of the one of the end caps.

4. The assembly of any preceding claim, wherein the body includes at least one hole extending axially through the body for permitting fluid flow through the body.

5. The assembly of claim 2 or claim 3 or 4 when dependent upon claim 2, wherein the inner flange provides an opening axially through the body for permitting fluid flow through the body.

6. The assembly of claim 2 or any one of claims 3 to 5 when dependent on claim 2, wherein multiple tabs extend from the inner flange in a star-shaped configuration.

7. The assembly of any preceding claim, wherein the body includes at least one retaining member on a side opposite a side of the body from which the at least one tab extends, the at least one retaining member operable to engage a cover of the filter assembly housing.

8. A method of replacing a filter cartridge of a filter assembly comprising the steps of:
a) opening a filter assembly housing and removing a used filter cartridge from the filter assembly housing;
b) activating a latch in the filter assembly housing in response to performing step a), the latch for preventing closing the filter assembly housing until the latch is deactivated;
c) inserting a new filter cartridge into the filter assembly housing;
d) arranging a latch release relative to the new filter cartridge, wherein step d) is performed separately from step c); and
e) deactivating the latch with the latch release and closing the filter assembly housing.

9. The method according to claim 8, wherein step d) includes placing the latch release over an end cap of the new filter cartridge.

10. The method according to claim 8 or 9, wherein the latch release includes at least one retaining member engaging a cover of the filter assembly housing.

11. A filter assembly comprising:
a housing having a body providing a cavity and a cover removably secured to the body;
a filter cartridge having a opposing end caps and a filter element retained between the end caps, the filter element providing a central opening;
a latch arranged within the central opening and movable between latched and unlatched positions; and
a latch release separable from the filter cartridge and arranged between one of the end caps and the cover, the latch release cooperating with the latch to move the latch from the latched to the unlatched position.

12. The filter assembly according to claim 11, comprising a center tube supported by the housing, the latch axially slidable relative to the center tube between the latched and unlatched positions.

13. The filter assembly according to claim 12, comprising a bypass valve proximate to the center tube and latch and axially slidable relative to the center tube and latch, the latch release engaging the bypass valve.

14. The filter assembly according to any one of claims 11 to 13, wherein the one of the end caps includes a hole, and the latch release includes at least one tab extending through the hole to engage the latch.

15. The filter assembly according to any one of claims 11 to 14, wherein the latch release includes at least one retaining member connecting the latch release to the cover.
